# FASCICULE DE BREVET EUROPEEN

(11) **EP 0 923 185 B1**
(45) Date de publication et mention de la délivrance du brevet: **25.03.2009**
(21) Numéro de dépôt: 98410116.2
(22) Date de dépôt: 07.10.1998
(51) Int. Cl.: H02J 13/00

(54) **Dispositif d'interruption électrique comportant un module de communication**
Elektrische Unterbrechungsvorrichtung mit einem Kommunikationsmodul
Electrical interruption device with a communication module

(30) Priorité: 09.12.1997 FR 9715811
(43) Date de publication de la demande: 16.06.1999
(73) Titulaire: SCHNEIDER ELECTRIC INDUSTRIES SAS, 92500 Rueil-Malmaison (FR)
(72) Inventeur: Louis, Patrice, 38050 Grenoble Cédex 09 (FR); Lemoine, Jocelyn, 38050 Grenoble Cédex 09 (FR)
(74) Mandataire: Jouvray, Marie-Andrée

(56) Documents cités:
- EP-A- 0 571 898
- EP-A- 0 792 096
- WO-A-93/12566
- DE-A- 19 546 268
- US-A- 5 440 088

## Description

L'invention concerne un dispositif d'interruption électrique comportant une pluralité d'emplacements pour des contacts auxiliaires dont l'état est représentatif de l'état du dispositif, au moins un contact auxiliaire disposé dans l'un desdits emplacements et un module de communication destiné à être connecté à un bus de communication.

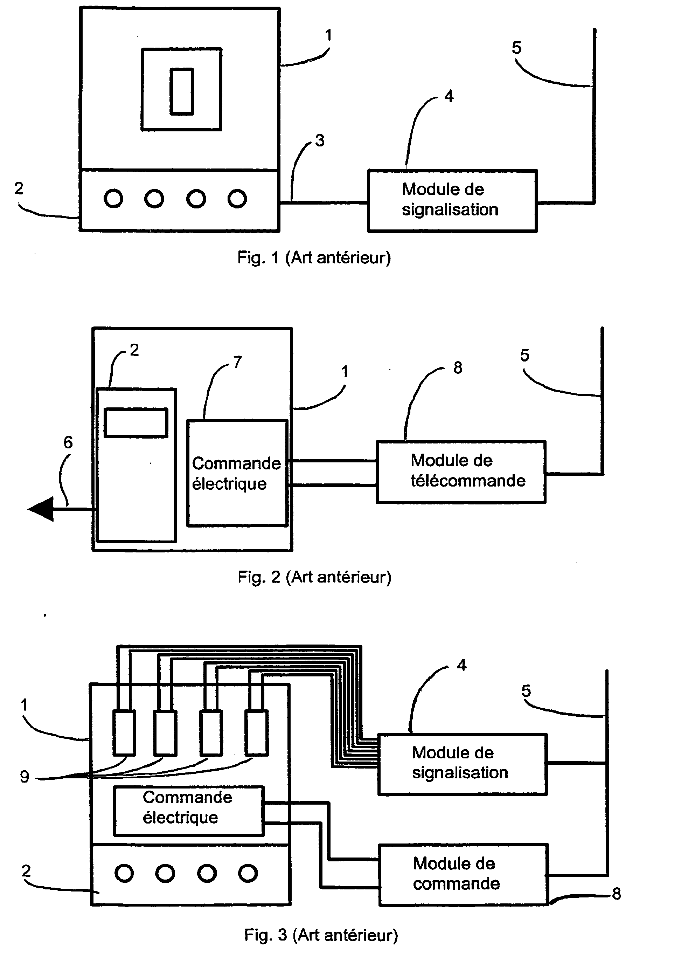

Les dispositifs d'interruption électrique, plus particulièrement les disjoncteurs et/ou les contacteurs, doivent pouvoir communiquer avec des organes de supervision et/ou de commande. Les figures 1 à 3 illustrent les divers types de communication prévus dans les disjoncteurs connus.

Le disjoncteur 1, selon la figure 1, comporte un déclencheur 2 de type électronique. Le déclencheur 2 comporte une sortie de communication permettant la transmission de données vers un module de signalisation externe 4 par une liaison série unidirectionnelle 3. A titre d'exemple, le déclencheur 2 peut transmettre des données représentatives des réglages du déclencheur, des valeurs de courant mesurées, du dépassement de certains seuils, de la cause d'un déclenchement. Le module 4 peut, quant à lui, être connecté à un bus de communication 5. Un déclencheur de ce type est, par exemple, commercialisé par la Demanderesse sous la marque STR53UE, en association avec un disjoncteur de marque COMPACT NS, pour communiquer avec un module de marque DIALPACT susceptible de communiquer avec un superviseur à travers un bus de type BatiBUS ou JBUS.

Le disjoncteur 1 selon la figure 2, comporte également un déclencheur 2 de type électronique. Celui-ci est capable de transmettre des informations à un bus 6 pouvant être relié directement à une unité de supervision. De plus, il peut être équipé d'une commande électrique 7 connectée à un bus 5, par l'intermédiaire d'un module 8 de télécommande externe. Un déclencheur de ce type est, par exemple, commercialisé par la Demanderesse sous la marque STR68, en association avec un disjoncteur de marque MASTERPACT. Il transmet des informations représentatives de l'état du disjoncteur ou de l'état du réseau à un superviseur par l'intermédiaire d'un bus de type JBUS ou PPNET.

Le disjoncteur 1 de la figure 3 est équipé d'un déclencheur 2 de type magnétothermique. Un tel déclencheur ne peut communiquer directement avec un bus extérieur. Cependant, le disjoncteur 1 comporte classiquement un certain nombre de contacts auxiliaires 9 actionnés par le mécanisme du disjoncteur et dont la position, liée à la position des contacts principaux du disjoncteur, est représentative de l'état du disjoncteur. Classiquement, un contact auxiliaire (O/F) indique la position ouvert/fermé des pôles du disjoncteur, un autre contact auxiliaire (SD) indique que le disjoncteur est dans l'état déclenché, tandis qu'un troisième contact (SDE) fournit un signal de défaut électrique lorsque le disjoncteur a été déclenché par un défaut électrique (surcharge, court-circuit, défaut différentiel) détecté par le disjoncteur. Les contacts auxiliaires peuvent être connectés, fil à fil, à un module de signalisation 4, externe, de type DIALPACT par exemple, qui peut lui-même être connecté à un superviseur par un bus 5. Le disjoncteur peut, comme sur la figure 2, être télécommandé, par l'intermédiaire du bus 5 et d'un module de télécommande 8 agissant sur une commande électrique 7 du disjoncteur. Un disjoncteur de ce type est, par exemple, commercialisé par la Demanderesse sous la marque COMPACT NS, avec un déclencheur magnétothermique de type TM. Le câblage fil à fil des contacts auxiliaires et du module de signalisation est réalisé par le tableautier.

Dans tous ces disjoncteurs, la communication avec un bus nécessite l'utilisation de modules de signalisation et/ou de télécommande externes au disjoncteur et un câblage spécifique par le tableautier en fonction du type de déclencheur utilisé.

L'invention a pour but un dispositif d'interruption pouvant être connecté directement à un bus de communication. Dans le cas d'un disjoncteur cette connexion doit être indépendante du type de déclencheur utilisé.

Ce but est atteint par l'objet défini par la revendication 1.

Le module de communication étant connecté aux contacts auxiliaires, ceci est applicable à tout dispositif disjoncteur ou contacteur, de type standard. Dans le cas d'un disjoncteur, celui-ci peut être équipé aussi bien d'un déclencheur magnétothermique que d'un déclencheur électronique. De plus, l'utilisation de l'emplacement d'un contact auxiliaire pour disposer le module de communication permet d'intégrer la communication par bus à n'importe quel dispositif d'interruption sans utiliser de modules externes. Le module de communication étant disposé à l'intérieur d'un disjoncteur, le câblage entre les contacts auxiliaires et le module est réalisé en usine, ce qui réduit au minimum le câblage par le tableautier lors de l'installation du dispositif.

Selon un développement de l'invention, le dispositif d'interruption comportant des relais de commande d'ouverture et de fermeture du dispositif le module est connecté électriquement auxdits relais de manière à permettre la télécommande du dispositif par l'intermédiaire du bus.

Le module de communication permet alors à la fois de fournir des informations de signalisation et de recevoir des ordres de télécommande par l'intermédiaire du bus de communication.

Selon un développement de l'invention, le module de communication comporte un circuit logique associé à des moyens de mémorisation d'au moins un paramètre pouvant être modifié par l'intermédiaire du bus, ledit circuit logique recevant des contacts auxiliaires des informations représentatives de l'état du dispositif d'interruption et des ordres de télécommande en provenance du bus et fournissant des ordres de commande aux relais d'ouverture et de fermeture en fonction des ordres de télécommande, de l'état du dispositif et desdits paramètres.

Selon des modes de réalisation particuliers, l'un desdits paramètres peut interdire une fermeture du dispositif par télécommande après ouverture du dispositif en réponse à un défaut électrique ou autoriser un réarmement automatique du dispositif ou autoriser la télécommande du dispositif à partir d'un module de commande et de signalisation local connecté au bus.

D'autres avantages et caractéristiques ressortiront plus clairement de la description suivante de différents modes de réalisation, donnés à titre d'exemples non limitatifs, et représentés sur les dessins annexés dans lesquels :
- Les figures 1 à 3 représentent des disjoncteurs selon l'art antérieur,
- la figure 4 illustre, sous forme schématique, la présente invention,
- la figure 5 représente un vue en perspective d'un contact auxiliaire,
- la figure 6 illustre la disposition d'un module de communication à l'intérieur d'un disjoncteur,
- la figure 7 représente schématiquement un module de communication selon l'invention et ses diverses connexions électriques.

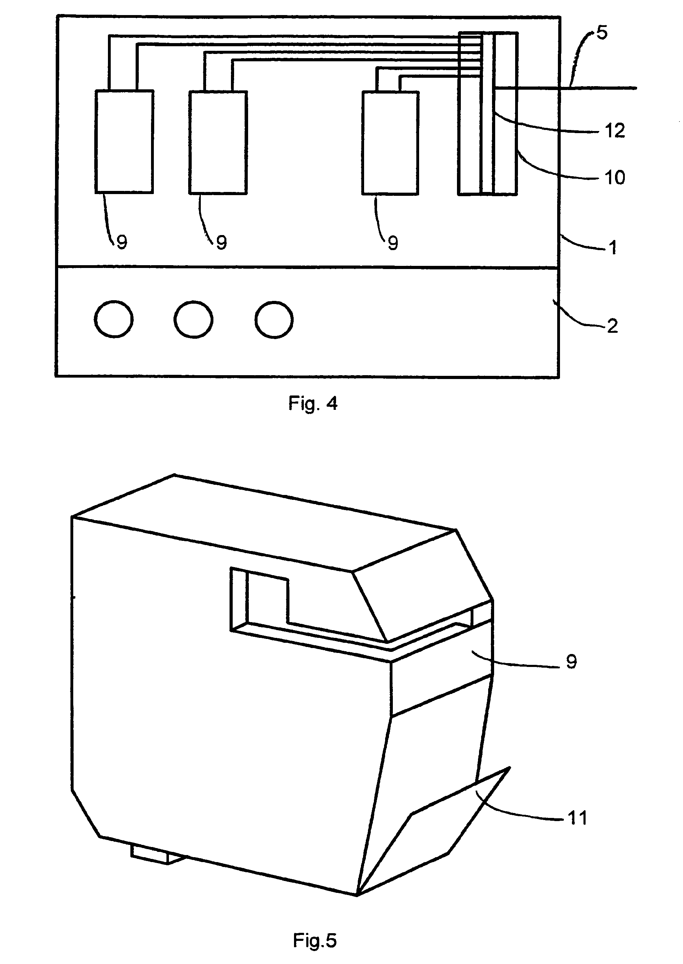

Dans le mode de réalisation particulier de la figure 4, le dispositif d'interruption selon l'invention est un disjoncteur 1, associé à un déclencheur 2, qui peut être aussi bien un déclencheur magnétothermique qu'un déclencheur électronique. Le disjoncteur 1 comporte trois contacts auxiliaires 9, qui sont, par exemple, du type illustré à la figure 5 et comporte, de plus, un module de communication 10. Celui-ci est disposé dans un emplacement normalement prévu pour un contact auxiliaire supplémentaire. Le module 10 a une forme et des dimensions telles qu'il peut être disposé sans difficulté dans un tel emplacement. Il a de préférence le même aspect qu'un contact auxiliaire 9 et constitue ainsi un contact auxiliaire communiquant. Dans un mode de réalisation préférentiel il a la même base et le même dispositif d'encliquetage 11 qu'un contact auxiliaire (fig. 5), mais peut être plus haut (fig. 4).

Comme représenté schématiquement à la figure 4, le module 10 comporte une carte de traitement 12 connectée électriquement d'une part au bus de communication 5 et, d'autre part, au moins aux contacts auxiliaires 9. Le mode de réalisation de la figure 4 constitue le modèle de base, qui permet la signalisation des états de l'appareil (O/F, SD, SDE) par l'intermédiaire du bus 5. Toute la filerie entre les contacts auxiliaires 9 et le module 10 est interne à l'appareil et le câblage à réaliser par un tableautier est réduit au minimum.

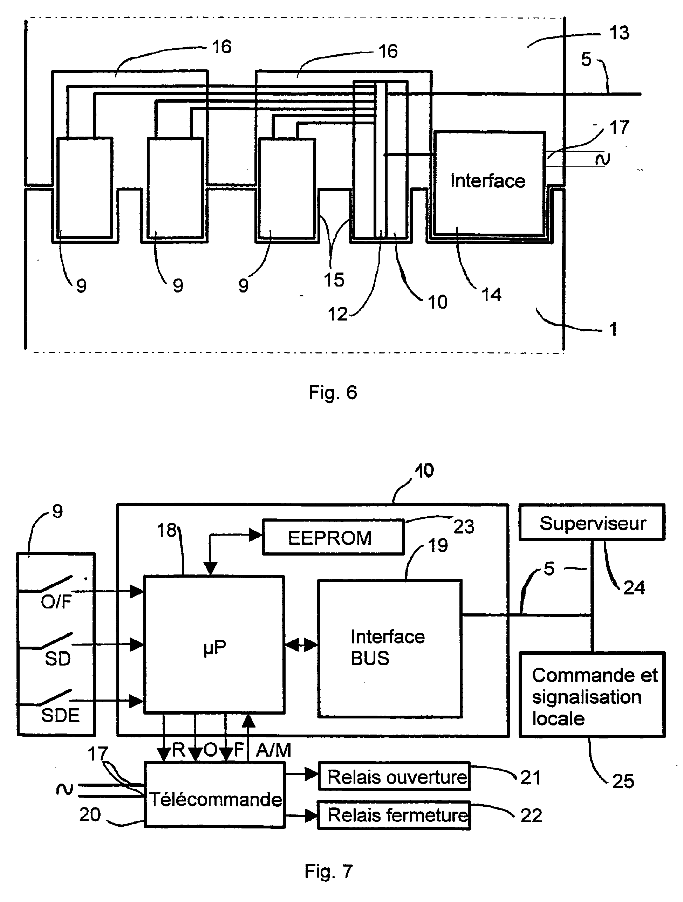

La figure 6 illustre un peu plus en détail la disposition d'un module 10 à l'intérieur d'un disjoncteur. Dans le mode particulier de réalisation de la figure 6, le module 10 permet à la fois la signalisation et la télécommande par l'intermédiaire du bus 5. La figure 6 est une vue de dessus, en coupe, de la face avant d'un disjoncteur 1 équipé d'un bloc de télécommande 13. Seule une interface 14 de connexion indispensable à la compréhension a été représentée dans le bloc de télécommande 13, qui est de type connu. Les contacts auxiliaires 9 et le module 10 sont disposés chacun dans un emplacement 15 prévu pour un contact auxiliaire. Classiquement, le bloc de télécommande 13 comporte des évidements 16 disposés, lorsqu'il est monté sur le disjoncteur 1, en regard des emplacements 15 des contacts auxiliaires pour en faciliter la connexion. Ceci permet de remplacer sans difficulté l'un des contacts auxiliaires par le module de communication 10, même si celui-ci est un peu plus haut que les contacts auxiliaires classiques.

Comme sur la figure 4, la carte de traitement 12 du module 10 est connectée électriquement à chacun des contacts auxiliaires 9 et au bus 5. De plus, elle est connectée électriquement à une interface 14 de connexion du bloc de télécommande. L'interface 14 a également une entrée de puissance 17 destinée à l'alimentation en puissance (220V alternatif par exemple) des relais d'ouverture et/ou de fermeture du disjoncteur auquel elle est connectée par l'intermédiaire du bloc de télécommande.

Le schéma électrique du module 10 selon la figure 6 est représenté plus en détail à la figure 7. Le module 10 comporte sur la carte de traitement (12) un circuit logique constitué de préférence par un microprocesseur 18 connecté par une interface 19 ou bus 5. L'interface 19 peut éventuellement être réalisée sous forme logicielle et être intégrée au microprocesseur 18. Le microprocesseur est également connecté aux contacts auxiliaires, dont trois (O/F, SD, SDE) sont représentés à la figure 7. Il peut ainsi transmettre les états de ces contacts au bus 5. Le microprocesseur 18 est également connecté au circuit de télécommande 20 d'un relais 21 d'ouverture et d'un relais 22 de fermeture du disjoncteur. Dans le mode de réalisation représenté, quatre fils relient le microprocesseur au circuit de télécommande. Ces fils sont respectivement destinés à la transmission d'un ordre d'ouverture (O), de fermeture (F) ou de réarmement (R) du module 10 vers la télécommande ou à la lecture par le module 10 de la position d'un contact (A/M), disposé en face avant du bloc de télécommande et définissant le mode de fonctionnement en automatique ou en manuel de la télécommande.

Le module 10 comporte également une mémoire 23, de préférence de type EEPROM, associée au microprocesseur 18. Cette mémoire est notamment destinée à mémoriser l'adresse du module 10 et le mode de fonctionnement de la télécommande. Dans un mode de réalisation préférentiel, un processus de téléadressage est effectué automatiquement par un superviseur 24 par l'intermédiaire du bus 5, lors de la mise sous tension du module 10. Si aucune adresse n'est mise en mémoire dans l'EEPROM 23, ou si celle-ci doit être modifiée, le superviseur affecte une adresse au module 10.

Il est parfois souhaitable de compléter le dispositif ci-dessus par un module 25 de commande et de signalisation locale. Celui-ci est destiné à être disposé en face avant d'un tableau dans lequel est disposé le disjoncteur 1. Il est connecté directement au bus 5, à la même adresse que le module de communication 10. Le module 10 peut être paramétré par le superviseur 24 pour fonctionner soit en mode distant uniquement, dans lequel il ne peut être commandé que par le superviseur, soit dans un mode local dans lequel la commande du disjoncteur par le module local 25 est également autorisée. Dans un mode de réalisation préférentiel le mode local est autorisé par défaut, mais peut être verrouillé par le superviseur qui paramètre de manière appropriée le module 10. Le paramètre correspondant est stocké dans l'EEPROM 23.

Dans le module de réalisation des figures 6 et 7, dans lequel le module 10 assure à la fois des fonctions de signalisation et de télécommande, celui-ci peut mettre en corrélation ces deux types de fonctions. A titre d'exemple, si après envoi d'un ordre d'ouverture ou de fermeture l'état suivant de la signalisation ne correspond pas à l'ordre donné, le module peut envoyer sur le bus 5 des signaux d'alarme représentatifs d'un défaut de la télécommande. Par ailleurs, le module peut être paramétré par le superviseur de manière à interdire, ou à autoriser un réarmement après déclenchement sur défaut électrique, signalisé par le contact auxiliaire SDE. Il peut également être paramétré pour permettre, ou non, un réarmement à distance, ou un réarmement automatique, en cas de déclenchement signalé par le contact auxiliaire SD.

Dans un mode de fonctionnement préférentiel, le module 10 effectue en permanence la lecture de l'état des contacts auxiliaires qui lui sont connectés et les compare avec leur état précédent. Si cet état a été modifié, ainsi qu'en cas de demande de la part du superviseur, le module transmet cette information au superviseur par l'intermédiaire du bus 5.

## Revendications

1. Dispositif d'interruption électrique comportant
une pluralité d'emplacements (15) pour des contacts auxiliaires dont l'état est représentatif de l'état du dispositif,
au moins un contact auxiliaire (9) disposé dans l'un desdits emplacements et
un module (10) de communication
destiné à être connecté à un bus de communication (5) et
connecté électriquement aux contacts auxiliaires (9),
ledit module constituant une interface de communication entre les contacts auxiliaires (9) et le bus (5)
dispositif **caractérisé en ce que**
le module de communication (10) est disposé à l'intérieur du dispositif (1) dans l'un desdits emplacements (15).

2. Dispositif selon la revendication 1, comportant des relais (21, 22) de commande d'ouverture et de fermeture du dispositif, **caractérisé en ce que** le module de communication (10) est connecté électriquement auxdits relais (21, 22) de manière à permettre la télécommande du dispositif par l'intermédiaire du bus (5).

3. Dispositif selon la revendication 2, **caractérisé en ce que** le module de communication (10) comporte un circuit logique (18) associé à des moyens (23) de mémorisation d'au moins un paramètre pouvant être modifié par l'intermédiaire du bus, ledit circuit logique (18) recevant des contacts auxiliaires (9) des informations représentatives de l'état du dispositif d'interruption (1) et des ordres de télécommande en provenance du bus (5) et fournissant des ordres de commande aux relais (21, 22) d'ouverture et de fermeture en fonction des ordres de télécommande, de l'état du dispositif et desdits paramètres.

4. Dispositif selon la revendication 3, **caractérisé en ce que** le circuit logique (18) fournit une alarme si l'état du dispositif ne correspond pas aux ordres de commande.

5. Dispositif selon l'une des revendications 3 et 4, **caractérisé en ce que** l'un desdits paramètres interdit une fermeture du dispositif par télécommande après ouverture du dispositif en réponse à un défaut électrique.

6. Dispositif selon l'une quelconque des revendications 3 à 5, **caractérisé en ce que** l'un desdits paramètres autorise un réarmement automatique du dispositif.

7. Dispositif selon l'une quelconque des revendications 3 à 6, **caractérisé en ce que** l'un desdits paramètre autorise la télécommande du dispositif (1) à partir d'un module de commande et de signalisation local (25) connecté au bus (5).

## Claims

1. An electrical breaking device comprising
a plurality of locations (15) for auxiliary contacts the state whereof is representative of the state of the device,
at least one auxiliary contact (9) arranged in one of said locations and a communication module (10),
designed to be connected to a communication bus (5) and
electrically connected to the auxiliary contacts (9),
said module constituting a communication interface between the auxiliary contacts (9) and the bus (5),
a device **characterized in that**
the communication module (10) is arranged inside the device (1) in one of said locations (15).

2. The device according to claim 1, comprising relays (21, 22) controlling opening and closing of the device, **characterized in that** the communication module (10) is electrically connected to said relays (21, 22) in such a way as to enable remote control of the device by means of the bus (5).

3. The device according to claim 2, **characterized in that** the communication module (10) comprises a logic circuit (18) associated with means (23) for storing at least one parameter able to be modified by means of the bus, said logic circuit (18) receiving information representative of the state of the breaking device (1) from the auxiliary contacts (9) and remote control orders provided by the bus (5), and supplying control orders to the opening and closing relays (21, 22) according to the remote control orders, the state of the device and said parameters.

4. The device according to claim 3, **characterized in that** the logic circuit (18) provides an alarm if the state of the device does not correspond to the control orders.

5. The device according to one of claims 3 and 4, **characterized in that** one of said parameters prevents closing of the device by remote control after opening of the device in response to an electrical fault.

6. The device according to any one of claims 3 to 5, **characterized in that** one of said parameters enables automatic resetting of the device.

7. The device according to one of claims 3 to 6, **characterized in that** one of said parameters enables remote control of the device (1) from a local control and annunciation module (25) connected to the bus (5).

## Patentansprüche

1. Elektrische Abschalteinrichtung mit
mehreren Einbauplätzen (15) für Hilfskontakte, deren Schaltzustand den Schaltzustand der Einrichtung abbildet,
mindestens einem, an einem der genannten Einbauplätze angeordneten Hilfskontakt (9) sowie einem Kommunikationsmodul (10), das dazu dient,
an einen Kommunikationsbus (5) angeschlossen zu werden und
elektrisch mit den Hilfskontakten (9) verbunden ist,
wobei das genannte Modul eine Kommunikationsschnittstelle zwischen den Hilfskontakten (9) und dem Bus (5) darstellt,
welche Einrichtung **dadurch gekennzeichnet ist, dass**
das Kommunikationsmodul (10) im Inneren der Einrichtung (1) an einem der Einbauplätze (15) angeordnet ist.

2. Einrichtung nach Anspruch 1 mit Relais (21, 22) zur Ein- und Ausschaltsteuerung der Einrichtung, **dadurch gekennzeichnet, dass** das Kommunikationsmodul (10) elektrisch mit den genannten Relais (21, 22) verbunden ist, derart dass die Fernbetätigung der Einrichtung über den Bus (5) ermöglicht wird.

3. Einrichtung nach Anspruch 2, **dadurch gekennzeichnet, dass** das Kommunikationsmodul (10) eine Logikschaltung (18) umfasst, die Speichermitteln (23) zur Speicherung mindestens einer, über den Bus veränderbaren Kenngröße zugeordnet ist, welche Logikschaltung (18) von den Hilfskontakten (9) den Schaltzustand der Abschalteinrichtung (1) abbildende Informationen sowie über den Bus (5) übertragene Fernbetätigungsbefehle erhält und von den Fernbetätigungsbefehlen, vom Schaltzustand der Einrichtung und von den genannten Kenngrößen abhängige Steuerbefehle an die Ausschalt- und Einschaltrelais (21, 22) überträgt.

4. Einrichtung nach Anspruch 3, **dadurch gekennzeichnet, dass** die Logikschaltung (18) eine Alarmmeldung absetzt, wenn der Schaltzustand der Einrichtung nicht mit den Steuerbefehlen übereinstimmt.

5. Einrichtung nach einem der Ansprüche 3 und 4, **dadurch gekennzeichnet, dass** eine der genannten Kenngrößen nach Abschaltung der Einrichtung aufgrund eines elektrischen Fehlers eine Ferneinschaltung der Einrichtung verhindert.

6. Einrichtung nach irgendeinem der Ansprüche 3 bis 5, **dadurch gekennzeichnet, dass** eine der genannten Kenngrößen ein automatisches Wiederspannen der Einrichtung erlaubt.

7. Einrichtung nach irgendeinem der Ansprüche 3 bis 6, **dadurch gekennzeichnet, dass** eine der genannten Kenngrößen die Fernbetätigung der Einrichtung (1) durch ein an den Bus (5) angeschlossenes lokales Steuer- und Anzeigemodul (25) erlaubt.
